# EUROPEAN PATENT APPLICATION

(11) **EP 4 289 547 A1**
(43) Date of publication of application: **13.12.2023**
(21) Application number: 22826785.2
(22) Date of filing: 29.11.2022
(51) Int. Cl.: B23P 15/00, B23Q 3/06

(54) **TOOL AND METHOD FOR MACHINING INJECTOR HOUSING AND INNER BOTTOM**

(30) Priority: 29.04.2022 CN 202210472224
(71) Applicant: Xi'an Space Engine Company Limited, Xi'an, Shaanxi 710100 (CN)
(72) Inventor: CHEN, Lei, Xi'an, Shaanxi 710100 (CN); LU, Bo, Xi'an, Shaanxi 710100 (CN); ZHANG, Heping, Xi'an, Shaanxi 710100 (CN); LIU, He, Xi'an, Shaanxi 710100 (CN); LIU, Guangxu, Xi'an, Shaanxi 710100 (CN); HE, Xiaohu, Xi'an, Shaanxi 710100 (CN); LIU, Chaozhi, Xi'an, Shaanxi 710100 (CN); LI, Baoqiang, Xi'an, Shaanxi 710100 (CN)
(74) Representative: Vitina, Maruta
(86) International application number: PCT/CN2022/135053
(87) International publication number: WO 2023/207071

(57) **Abstract**

A machining tool for an injector housing and an inner bottom, including: a positioning plate, a first cushion block, a first pressing plate and multiple expanders. The positioning plate has a column shape. An outer diameter of the positioning plate decreases in a stepped manner from bottom to top. An outer side wall at a top of the positioning plate is provided with a groove. A hole is provided inside the groove. The expanders are provided inside the groove. The expanders are circumferentially arranged around the groove to form a circle. The inner bottom is sleeved on a top of the positioning plate. The injector housing is arranged on the positioning plate, and sleeved on an outer surface of the inner bottom. In this application, the holes of the injector housing and the inner bottom of a liquid propellant rocket engine are made before welding, and the coaxial precision of the holes of the injector housing and the inner bottom is also improved.

## Description

### TECHNICAL FIELD

This application relates to liquid propellant rocket engines, and more particularly to a machining tool and method for an injector housing and an inner bottom, namely a machining tool and method for an injector housing and an inner bottom hole of a liquid propellant rocket engine.

### BACKGROUND

Injector housing and inner bottom are indispensable components of a liquid propellant rocket engine for power supply. There are generally a large number end-face holes on the injector housing and the inner bottom, and the end-face holes are required to be machined before welding the injector housing with the inner bottom. During the assembly-welding process, the end-face holes on the injector housing should be correspondingly coaxial with those on the inner bottom. Unfortunately, considering that the independent machining will inevitably cause position error, and the number of end-face holes is large, it is difficult to ensure relative positions of multiple end-face holes during the assembly, and thus fails to reach the desired machining accuracy after welding. Those injector housings and inner bottoms made of a low-hardness materials generally have poor rigidity, and are prone to deformation during the mechanical clamping process. The relative position between the end-face holes on the injector housing and the end-face holes on the inner bottom is closely associated with the fluid flow rate of the engine. In view of this, separately machining the end-face holes on the injector housing and the end-face holes on the inner bottom will affect the fluid flow rate of the engine, and further affect the engine stability and reliability.

### SUMMARY

In order to overcome the problems in the art that the injector housing and inner bottom of a liquid propellant rocket engine are required to be machined with end-face holes before welding, and it is difficult to ensure the position accuracy of the end-face holes, this application provides a machining tool and method for an injector housing and an inner bottom.

Technical solutions of this application are specifically described as follows.

In a first aspect, this application provides a machining tool for an injector housing and an inner bottom, comprising:
a positioning plate;
a first cushion block;
a first pressing plate; and
a plurality of expanders;
characterized in that the positioning plate has a column shape; an outer diameter of the positioning plate decreases in a stepped manner from bottom to top; an outer side wall at a top of the positioning plate is provided with a groove; the groove is circumferentially arranged around the top of the positioning plate to form a circle; a hole is provided inside the groove; an inside of the positioning plate is axially provided with a through hole; the hole is communicated with the through hole; the inner bottom is sleevedly provided on the top of the positioning plate; the injector housing is arranged on the positioning plate; and the injector housing is sleeved on an outer surface of the inner bottom; and
the plurality of expanders are provided inside the groove; the plurality of expanders are circumferentially arranged around the groove to form a circle; the plurality of expanders abut against an inner surface of the inner bottom; the plurality of expanders are configured to be adjusted to allow the outer surface of the inner bottom to reach a desired position; the first cushion block is located between the positioning plate and the first pressing plate; the first cushion block is configured to support the first pressing plate, such that the first pressing plate is connected to the positioning plate; and the first pressing plate is configured to press the injector housing and fix a position of the injector housing with respect to the inner bottom.

In some embodiments, an arc length of each of the plurality of expanders is 100-130 mm; and a hardness of the plurality of expanders is not greater than a hardness of the inner bottom.

In some embodiments, the hardness of the plurality of expanders is one level lower than the hardness of the inner bottom.

In some embodiments, the machining tool further comprises:
a pressing ring;
a second pressing plate; and
a second cushion block;
characterized in that the pressing ring is arranged at a top of the inner bottom; the second cushion block is arranged between the positioning plate and the second pressing plate; the second cushion block is configured to support the second pressing plate; and after the second pressing plate is connected to the positioning plate, the second pressing plate is configured to press the pressing ring to fix a position of the inner bottom with respect to the positioning plate.

In a second aspect, this application provides a method for machining an injector housing and an inner bottom using the above-mentioned machining tool, comprising:
pressing the machining tool onto a working platform of a machine;
mounting the inner bottom at the top of the positioning plate; adjusting a radial position of each of the plurality of expanders in the groove to allow the outer surface of the inner bottom to reach a desired size;
making a first end-face hole on the inner bottom; keeping the inner bottom fixed with respect to the positioning plate; arranging the injector housing on the positioning plate, and sleeving the injector housing on the outer surface of the inner bottom; fixing the injector housing through the first pressing plate; and making a second end-face hole on the injector housing; and
keeping the injector housing and the inner bottom fixed with respect to the positioning plate, and detaching the machining tool from the machine; and welding the injector housing with the inner bottom.

Compared to the prior art, this application has the following beneficial effects.
(1) Regarding the machining method provided herein, the injector housing and the inner bottom are integrally clamped and positioned, and their end-face holes are made in a stepped manner. The number of the end-face holes on the injector housing and those on the inner bottom can be up to several hundred, and the end-face holes have great position accuracy. The injector housing and the inner bottom are welded when the end-face holes of the injector housing are correspondingly coaxial with those on the inner bottom. The relative position between the end-face holes of the injector housing and those of the inner bottom satisfies the machining requirement. The method provided herein ensures the position accuracy of the end-face holes of the injector housing and the inner bottom, and the relative position of the end-face holes of the injector housing and the inner bottom can satisfy the machining requirement.
(2) The machining tool provided herein has optimized design. Specifically, it has a multi-pedal structure, in which the expanders are in direct contact with the inner surface of the inner bottom and abut against the inner bottom to position and fix the inner bottom. The multi-pedal structure can realize the independent adjustment of multi-directional supporting forces, so that the outer circle coaxiality of the inner bottom, the machining tool and the machine are kept within a required range. In this way, the processing, positioning and position adjustment of the inner bottom are enabled. This application improves the processing qualification rate of the injector housing and the inner bottom of the liquid propellant rocket engine through the reasonable machining method and tool.
(3) The machining tool and method provided herein improve the processing accuracy of the end-face holes of the inner bottom and the injector housing, and also promoting the clamping of the inner bottom and the injector housing (the clamping efficiency is improved by more than 200%).
(4) The multi-pedal structure (expanders) is made of a relatively soft material such as H62 brass (with an average copper content of 62%), which can not only play a role in supporting the inner bottom and adjusting the coaxiality, but also can protect the surface of the inner bottom from being crushed.
(5) The method provided herein is more applicable to the machining of two cylindrical parts with relatively low hardness, and the machining of the parts free of fixable process holes or easily-fixed process positions in the machining state. The number of the end-face holes of the two parts is up to 1000 at most, and the number and the positions of the end-face holes are the same. It can ensure that after the two parts are machined, the maximum machining accuracy of the end-face holes reaches 0.0015 mm, and the minimum accuracy is 0.003 mm.
(6) The method provided herein can integrally use the injector housing, the inner bottom and the machining tool in the welding process of the injector housing and the inner bottom, and can also detach the injector housing, the inner bottom and the machining tool for the next process. After repeatedly assembled, the end-face holes of the injector housing and inner bottom can also reach a desired coaxiality (0.005 mm).

### BRIEF DESCRIPTION OF THE DRAWINGS

Fig. 1 is a structural diagram of a machining tool for an injector housing and an inner bottom according to an embodiment of the present disclosure;
Fig. 2 is a structural diagram of an inner bottom machining tool according to an embodiment of the present disclosure;
Fig. 3 is a structural diagram of a positioning plate according to an embodiment of the present disclosure;
Fig. 4 is a structural diagram of an expander according to an embodiment of the present disclosure;
Fig. 5 is a structural diagram of a pressing ring and a fixing plate according to an embodiment of the present disclosure;
Fig. 6 schematically shows an expander-based tension mechanism according to an embodiment of the present disclosure; and
Fig. 7 is a structural diagram of the injector housing and the inner bottom according to an embodiment of the present disclosure.

### DETAILED DESCRIPTION OF EMBODIMENTS

The disclosure will be described completely and clearly below with reference to the accompanying drawings and embodiments to make the object, technical solutions, and beneficial effects of the present disclosure clearer.

### Embodiment 1

Provided herein are a machining tool and method for an injector housing and an inner bottom.

Multiple second end-face holes of the injector housing 30 are coaxially welded with multiple first end-face holes of the inner bottom 20. The number of the second end-face holes of the injector housing 30 is the same as that of the first end-face holes of the inner bottom 20. The injector housing 30 and the inner bottom 20 experience one-time clamping to ensure positioning accuracy. During the one-time clamping, the second end-face holes on the injector housing 30 and the first end-face holes on the inner bottom 20 are machined separately using the same procedure to ensure the accuracy of relative position between the second end-face holes and the first end-face holes.

The machining tool includes a positioning plate 1, a first cushion block 2, a first pressing plate 3, a first screw 4, a second screw 5, a set screw 6, an expander 7, a pressing ring 8, a third screw 9, a second pressing plate 10 and a second cushion block 11. The machining tool is configured to locate and clamp the injector housing 30 and the inner bottom 20.

The method for machining includes the following steps.
(S 1) Four standard flat blocks with a certain height are arranged on a working platform of a computerized numerical control (CNC) machine. The machining tool is mounted on the four standard blocks, and is pressed onto the working platform of the CNC machine by means of a T-bolt.
(S2) The inner bottom 20 is mounted on the positioning plate 1, and is fixed radially on the positioning plate 1 by means of the second screw 5, the set screw 6 and the expander 7. The expander 7 is adjusted to allow the expander 7 to press an inner surface of the inner bottom 20. A diameter of the inner bottom 20 is measured by metering using the CNC machine to make sure the diameter of the inner bottom 20 to reach a desired size. The inner bottom 20 is vertically fixed by means of the pressing ring 8, the third screw 9, the second pressing plate 10 and the second cushion block 11.
(S3) A first end-face hole is made on the inner bottom 20. The inner bottom (20) is kept fixed with respect to the positioning plate 1. The pressing ring 8, the third screw 9, the second pressing plate 10 and the second cushion block 11 are detached. The injector housing 30 is arranged on the positioning plate, and sleeved on the inner bottom 20. The first screw 4 successively penetrates a through hole of the first pressing plate 3 and a through hole of the first cushion block 2 to press and fix the injector housing 30. A second end-face hole is made on the injector housing 30.
(S4) After the first end-face hole is made on the inner bottom 20 and the first end-face hole is made on the injector housing 30, the T-bolt connected to the CNC machine is detached when keeping a position of the injector housing 30 with respect to the inner bottom 20. The injector housing 30, the inner bottom 20 and the machining tool are involved in the welding of the injector housing 30 and the inner bottom 20.

In the step (S1), the machining tool should be mounted on the four standard blocks, such that an outer diameter of the expander 7 is convenient to be adjusted by the second screw 5 and the set screw 6.

In the step (S2), the inner bottom 20 is mounted on the positioning plate 1. The expander 7 is adjusted through the second screw 5 and the set screw 6, such that the expander 7 touches an inner surface of the inner bottom 20. By adjusting the expander 7, a circle run-out of an outer surface of the inner bottom 20 and a circle run-out of a positioning shaft end of the machining tool are measured by a dial indicator, making sure that the outer surface of the inner bottom 20 is coaxial with the machining tool. Then, the inner bottom 20 is vertically fixed by means of the pressing ring 8, the third screw 9, the second pressing plate 10 and the second cushion block 11, and then the first end-face hole is made on the inner bottom 20 using a boring method.

In the step (S2), the expander 7 has a multiple-valve structure. The number of the expander 7 is determined according to a size of a workpiece to be machined. An arc length of each expander is 100-130 mm. A hardness of the expander 7 is the same to or one level lower than a hardness of the inner bottom 20. The multiple-valve structure enables an independent adjustment of tensioning force in different directions by independently adjusting each valve of the expander.

In the step (S3), after making the first end-face hole on the inner bottom 20, the inner bottom 20 is fixed with respect to the positioning plate 1, and the injector housing 30 is mounted on the inner bottom 20. An outer edge of the injector housing 30 is pressed by using the first screw 4, the first cushion block 2 and the first pressing plate 3, so as to fix the injector housing 30.

In the step (S3), the number and the size of the second end-face hole of the injector housing 30 are the same as the number and the size of the first end-face hole of the inner bottom 20. The second end-face hole is coaxial with the first end-face hole. In order to ensure a relative position between the injector housing 30 and the inner bottom 20, after the first end-face hole of the inner bottom 20 is made, the injector housing 30 is fixed and pressed, and the second end-face hole is directly made on an upper end face of the injector housing 30 by using the same numerical control processing program.

In the step (S4), the injector housing 30, the inner bottom 20 and the machining tool are kept assembled, the injector housing 30 and the inner bottom 20 are welded when the second end-face hole of the injector housing 30 is coaxially with the first end-face hole of the inner bottom 20.

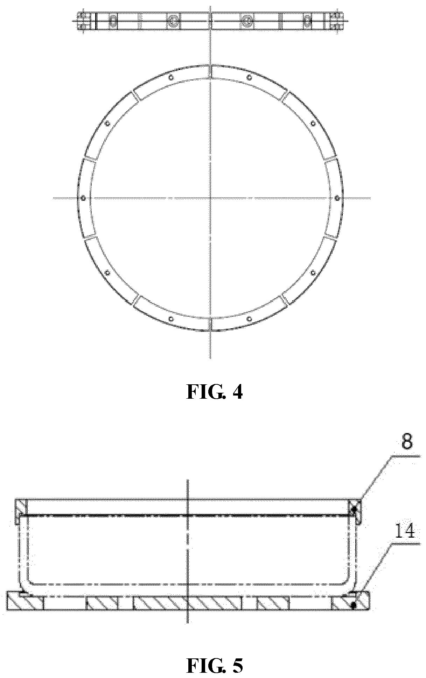

In an embodiment, referring to Fig. 5, the machining tool further includes the pressing ring 8 and a fixing plate 14. After the inner bottom 20 is machined with the first end-face hole, the inner bottom 20 is connected to the working platform of the CNC machine through the fixing plate 14. The pressing ring 8 is pressed onto the inner bottom 20 to facilitate the pressing, so as to carry out a dimple process on the first end-face hole, which is shown as Fig. 4.

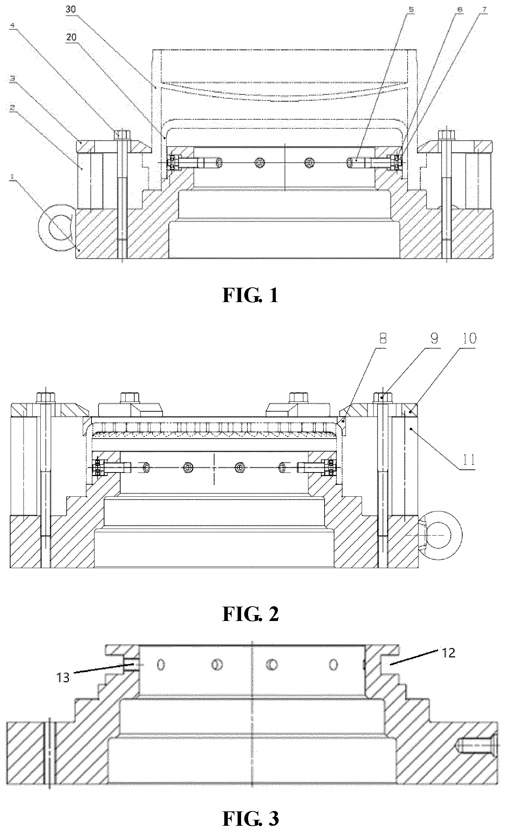

Referring to Fig. 1, a structure of the machining tool is shown. The four standard blocks with the same height are mounted on the working platform of the CNC machine. The machining tool is mounted on the four standard blocks, and is pressed onto the working platform of the CNC machine by means of the T-bolt. The inner bottom 20 is mounted on the positioning plate 1, and is fixed on the positioning plate 1 by means of the second screw 5, the set screw 6 and the expander 7. The expander 7 presses the inner surface of the inner bottom 20. The diameter of the inner bottom 20 is measured by metering using the CNC machine to make sure that the diameter of the inner bottom 20 reaches a desired size. The inner bottom 20 is vertically fixed by means of the pressing ring 8, the third screw 9, the second pressing plate 10 and the second cushion block 11. The second end-face hole is made on the inner bottom 20. A position of the inner bottom 20 with respect to the positioning plate 1 is kept. The pressing ring 8, the third screw 9, the second pressing plate 10 and the second cushion block 11 are detached. The injector housing 30 is sleeved on the inner bottom 20. The injector housing 30 is pressed and fixed by the first cushion block 2, the first screw 4 and the first pressing plate 3, then the first end-face hole is made on the injector housing 30. After the first end-face hole and the second end-face hole are made, the position of the injector housing 30 with respect to the inner bottom 20 is kept, and the T-bolt connected to the CNC machine is detached. The injector housing 30, the inner bottom 20 and the machining tool are involved in the welding of the injector housing 30 and the inner bottom 20; or in an embodiment, after the injector housing 30, the inner bottom 20 and the machining tool are integrally detached, the next process is performed, and the injector housing 30, the inner bottom 20 and the machining tool are repeatedly assembled, which also satisfies the coaxiality requirement of the second end-face hole of the injector housing 30 and the first end-face hole of the inner bottom 20.

### Embodiment 2

Referring to Figs. 1-4, provided is a machining tool for an injector housing and an inner bottom, including a positioning plate 1, a first cushion block 2, a first pressing plate 3, multiple expanders 7, a pressing ring 8, a second pressing plate 10 and a second cushion block 11.

The positioning plate 1 has a column shape. An outer diameter of the positioning plate 1 decreases in a stepped manner from bottom to top. An outer side wall at a top of the positioning plate 1 is provided with a first groove 12. The first groove 12 is circumferentially arranged around the top of the positioning plate 1 to form a circle. A hole 13 is provided inside the first groove 12. An inside of the positioning plate 1 is provided with a through hole along an axial direction. The hole 13 is communicated with the through hole. The inner bottom 20 is sleeved on the top of the positioning plate 1. The injector housing 30 is arranged on the positioning plate 1. The injector housing 30 is sleeved on an outer surface of the inner bottom 20.

The expanders 7 are provided inside the first groove 12. The expanders 7 are circumferentially arranged around the first groove 12 to form a circle. The expanders 7 abut against the inner surface of the inner bottom 20. One or multiple of the expanders 7 are configured to be adjusted to allow the outer surface of the inner bottom 20 is allowed to reach a desired position.

The pressing ring 8 is arranged at a top of the inner bottom 20. The second cushion block 11 is arranged between the positioning plate 1 and the second pressing plate 10. The second cushion block 11 is configured to support the second pressing plate 10. After the second pressing plate 10 is connected to the positioning plate 1, the second pressing plate 10 is configured to press the pressing ring 8 to fix a position of the inner bottom 20 with respect to the positioning plate 1. The first cushion block 2 is located between the positioning plate 1 and the first pressing plate 3. The first cushion block 2 is configured to support the first pressing plate 3. Since the first pressing plate 3 is connected to the positioning plate 1, the first pressing plate 3 is configured to press the injector housing 30 and fix a position of the injector housing 30 with respect to the inner bottom 20.

Specifically, the positioning plate 1 has a multi-step structure from bottom to top. In an embodiment, there are three steps, including a first step, a second step and a third step from top to bottom. The inner bottom 20 is arranged on the first step. The injector housing 30 is arranged on the second step. The outer surface of the inner bottom 20 contacts with an inner surface of the injector housing 30.

In an embodiment, a thickness of an opening of inner bottom 20 is not less than a width of the first step, such that the outer surface of the inner bottom 20 is facilitate to contact with the inner surface of the injector housing 30.

Specifically, the injector housing 30 is provided with a bulge at a position close to a bottom of the injector housing 30. The first pressing plate 3 is configured to press an upper surface of the bulge, so as to allow the injector housing 30 to be axially fixed on the positioning plate 1.

In an embodiment, the first cushion block 2 is provided with a second groove matched with the bulge. The bulge is arranged in the second groove, and abuts against a bottom of the second groove. The bulge is fitted to the first pressing plate 3 and the first screw 4 to fix the injector housing 30 on the positioning plate 1 in a horizontal direction.

In an embodiment, an arc length of each expander 7 is 100-130 mm. A hardness of the expanders 7 is not greater than that of the inner bottom 20.

In an embodiment, the hardness of the expanders 7 is one level lower than the hardness of the inner bottom 20.

A method for machining for the injector housing and the inner bottom using the machining tool described in Embodiment 1 or 2 includes the following steps.

The machining tool is pressed onto the working platform of the CNC machine.

The inner bottom 20 is mounted at the top of the positioning plate 1. A radial position of the expander 7 in the first groove 12 is adjusted to allow the outer surface of the inner bottom 20 to reach a desired size. The requirement is as follows: a cylindricity ±0.0015 mm. The inner bottom 20 is vertically fixed by means of the pressing ring 8, the third screw 9, the second pressing plate 10 and the second cushion block 11.

The first end-face hole is made on the inner bottom 20. The position of the inner bottom 20 with respect to the positioning plate 1 is kept, and the pressing ring 8, the third screw 9, the second pressing plate 10 and the second cushion block 11 are detached. The injector housing 30 is arranged on the positioning plate 1, and sleeved on the outer surface of the inner bottom 20. The injector housing 30 is fixed through the first pressing plate 3. Then, the second end-face hole is made on the injector housing 30.

The position of the injector housing 30 and the inner bottom 20 with respect to the positioning plate 1 are kept, and the machining tool is detached from the CNC machine. The injector housing 30 and the inner bottom 20 are welded.

In an embodiment, the working platform of the CNC machine is provided with multiple blocks. The machining tool is arranged on the blocks, such that the machining tool is connected to the working platform of the CNC machine.

In an embodiment, the second end-face hole of the injector housing 30 and the first end-face hole of the inner bottom 20 are made by boring.

In an embodiment, the second end-face hole of the injector housing 30 are the same with the first end-face hole of the inner bottom 20 in number and size. The second end-face hole of the injector housing 30 is coaxial with the first end-face hole of the inner bottom 20.

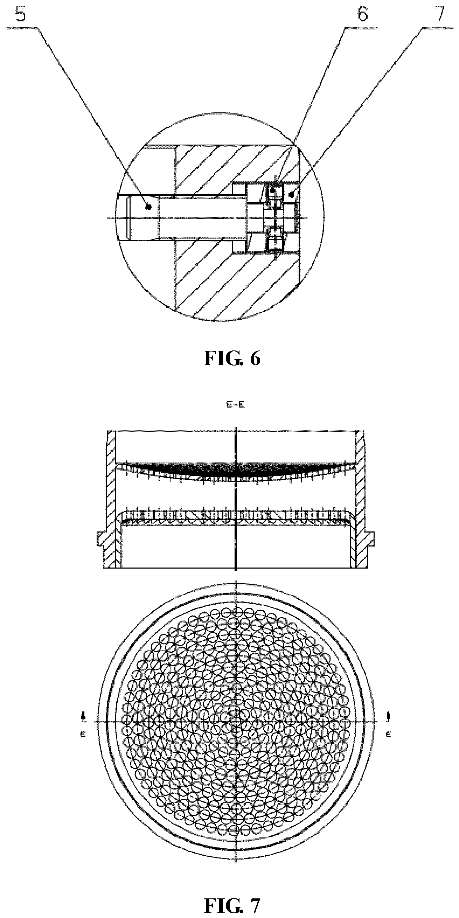

Specifically, referring to Fig. 7, the first end-face hole of the inner bottom 20 is arranged at the top of the inner bottom. The second end-face hole of the injector housing 30 is arranged at the top of the injector housing 30.

In an embodiment, the outer surface of the inner bottom 20 is measured by metering using the CNC machine.

In an embodiment, the machining tool further includes a bolt. The bolt is penetratedly arranged inside the hole 13 of the first groove 12. One end of the bolt is positioned inside the hole 13, the other end of the bolt is connected to the expander 7. The bolt is capable of moving along an axial direction of the hole 13 to drive the expander 7 to move along a radial direction of the inner bottom 20, so as to adjust a radial position of the expander 7 at the first groove 12.

Specifically, referring to Fig. 6, the bolt includes the second screw 5, a first set screw 6 and a second set screw 6. One end of the second screw 5 is arranged inside the through hole of the positioning plate 1. The other end of the second screw 5 is connected to the expander 7. The first set screw 6 and the second set screw 6 are arranged oppositely. One end of the first set screws 6 is arranged at a side wall of a top of the first groove 12, and the other end of the first set screws 6 abuts against a top of the second screw 5. One end of the second set screws 6 is arranged at a side wall of a bottom of the first groove 12, and the other end of the second set screws 6 abuts against a bottom of the second screw 5. In an embodiment, the second end-face hole of the injector housing 30 and the first end-face hole of inner bottom 20 are machined by using the same numerical control processing program.

The content not described in detail in the description is well known to those of ordinary skill in the art.

Described above are merely preferred embodiments of the disclosure, which are not intended to limit the disclosure. It should be understood that various modifications and changes made by those skilled in the art without departing from the spirit and scope of the disclosure shall fall within the scope of the disclosure defined by the appended claims.

## Claims

1. A machining tool for an injector housing and an inner bottom, comprising:
a positioning plate (1);
a first cushion block (2);
a first pressing plate (3); and
a plurality of expanders (7);
**characterized in that** the positioning plate (1) has a column shape; an outer diameter of the positioning plate (1) decreases in a stepped manner from bottom to top; an outer side wall at a top of the positioning plate (1) is provided with a groove (12); the groove (12) is circumferentially arranged around the top of the positioning plate (1) to form a circle; a hole (13) is provided inside the groove (12); an inside of the positioning plate (1) is axially provided with a through hole; the hole (11) is communicated with the through hole; the inner bottom (20) is sleevedly provided on the top of the positioning plate (1); the injector housing (30) is arranged on the positioning plate (1); and the injector housing (30) is sleeved on an outer surface of the inner bottom (20); and
the plurality of expanders (7) are provided inside the groove (12); the plurality of expanders (7) are circumferentially arranged around the groove (12) to form a circle; the plurality of expanders (7) abut against an inner surface of the inner bottom (20); the plurality of expanders (7) are configured to be adjusted to allow the outer surface of the inner bottom (20) to reach a desired position; the first cushion block (2) is located between the positioning plate (1) and the first pressing plate (3); the first cushion block (2) is configured to support the first pressing plate (3), such that the first pressing plate (3) is connected to the positioning plate (1); and the first pressing plate (3) is configured to press the injector housing (30) and fix a position of the injector housing (30) with respect to the inner bottom (20).

2. The machining tool according to claim 1, **characterized in that** an arc length of each of the plurality of expanders (7) is 100-130 mm; and a hardness of the plurality of expanders (7) is not greater than a hardness of the inner bottom (20).

3. The machining tool according to claim 2, **characterized in that** the hardness of the plurality of expanders (7) is one level lower than the hardness of the inner bottom (20).

4. The machining tool according to claim 1, further comprising:
a pressing ring (8);
a second pressing plate (10); and
a second cushion block (11);
**characterized in that** the pressing ring (8) is arranged at a top of the inner bottom (20); the second cushion block (11) is arranged between the positioning plate (1) and the second pressing plate (10); the second cushion block (11) is configured to support the second pressing plate (10); and after the second pressing plate (10) is connected to the positioning plate (1), the second pressing plate (10) is configured to press the pressing ring (8) to fix a position of the inner bottom (20) with respect to the positioning plate (1).

5. A method for machining an injector housing and an inner bottom using the machining tool according to any one of claims 1-4, comprising:
pressing the machining tool onto a working platform of a machine;
mounting the inner bottom (20) at the top of the positioning plate (1); adjusting a radial position of each of the plurality of expanders (7) in the groove (12) to allow the outer surface of the inner bottom (20) to reach a desired size;
making a first end-face hole on the inner bottom (20); keeping the inner bottom (20) fixed with respect to the positioning plate (1); arranging the injector housing (30) on the positioning plate (1), and sleeving the injector housing (30) on the outer surface of the inner bottom (20); fixing the injector housing (30) through the first pressing plate (3); and making a second end-face hole on the injector housing (30); and
keeping the injector housing (30) and the inner bottom (20) fixed with respect to the positioning plate (1), and detaching the machining tool from the machine; and welding the injector housing (30) with the inner bottom (20).

6. The method according to claim 5, **characterized in that** a plurality of blocks are placed on the working platform of the machine; the machining tool is mounted on the plurality of blocks, such that the machining tool is connected to the working platform of the machine through the plurality of blocks.

7. The method according to claim 5, **characterized in that** after adjusting the radial position of the plurality of expanders (7) in the groove (12), the pressing ring (8) is pressed onto the inner bottom (20), and the inner bottom (20) is vertically fixed by means of the second pressing plate (10) and the second cushion block (11).

8. The method according to claim 5, **characterized in that** after drilling the first end-face hole on the inner bottom (20), the pressing ring (8), the second pressing plate (10) and the second cushion block (11) are removed while keeping the inner bottom (20) fixed with respect to the positioning plate.

9. The method according to claim 5, **characterized in that** the second end-face hole and the first end-face hole are made by boring.

10. The method according to claim 5, **characterized in that** the number of the second end-face hole is the same as the number of the first end-face hole; a size of the second end-face hole is the same as a size of the first end-face hole; and the second end-face hole is coaxial with the first end-face hole.

11. The method according to claim 5, **characterized in that** the outer surface of the inner bottom (20) is measured by metering using a computerized numerical control (CNC) machine.

12. The method according to claim 5, **characterized in that** the machining tool further comprises a bolt; the bolt is penetratedly arranged inside the hole (13) of the groove (12); one end of the bolt is located inside the through hole, and the other end of the bolt is connected to the plurality of expanders (7); and the bolt is capable of moving along an axial direction of the hole (13) to adjust the radial position of the plurality of expanders (7) at the groove (12).

13. The method according to claim 5, **characterized in that** the second end-face hole and the first end-face hole are made by using the same numerical control processing program.
